Europäisches Patentamt

European Patent Office

Office européen des brevets

(11) Publication number: **0 321 149**
**A2**

## (12) EUROPEAN PATENT APPLICATION

(21) Application number: 88311647.7

(51) Int. Cl.4: **G02B 27/00**

(22) Date of filing: 08.12.88

(30) Priority: 17.12.87 GB 8729453

(43) Date of publication of application:
**21.06.89 Bulletin 89/25**

(84) Designated Contracting States:
**AT BE CH DE ES FR GR IT LI LU NL SE**

(71) Applicant: GEC AVIONICS, INC.
2975 Northwoods Parkway/Norcross P.O. Box 81999
Atlanta Georgia 30366(US)

(72) Inventor: Firth, Kenneth
36 Simmons Way
Danbury Chelmsford Essex CM3 4PT(GB)
Inventor: Patterson, Scott William
415 Chase Common Drive
Norcross Georgia 30071(US)

(74) Representative: Waters, Jeffrey et al
The General Electric Company plc Central
Patent Department Marconi Research Centre
West Hanningfield Road
Great Baddow Chelmsford Essex CM2 8HN(GB)

(54) **Head-up display.**

(57) In a conventional head-up display for a curved windscreen, the light beam containing the image of the display must be pre-distorted before it impinges on the windscreen so that a collimated, non-distorted image is reflected to the driver. The invention uses a transmission holographic system 8 in place of correcting optics and consists of two holograms, one of which corrects for chromatic aberration to permit the use of a filtered incoherent source to illuminate the display.

FIG. 1

## HEAD-UP DISPLAY

This invention relates to head-up displays.

Such displays are known for use in aircraft wherein a pilot views a collimated display emanating from a cathode ray tube and a conventional optical system. This is viewed through a partially transmitting plane mirror known as a combiner. It has also been proposed for a cathode ray tube display to be used in conjunction with a holographic mirror acting simply as a combiner or in the dual role of combiner and collimator.

Head-up displays are also known for use in motor cars but the display is reflected from the windscreen rather than from a separate combiner, and the windscreen is usually doubly curved with different curvatures in the horizontal and vertical axes. As a result the collimator optics must incorporate means, such as additional cylindrical lenses, for compensating for the decollimation and distortion introduced by the windscreen. Also, a different set of corrector optics must be used for any model with a significantly different windscreen curvature. It has also heen proposed (European Patent Application No. 0 216 692) to reflect the display, not from the windscreen, but from a holographic mirror mounted on the windscreen , which may also act as collimator.

The invention provides a head-up display for a curved windscreen, which comprises means for producing a beam emanating from a display arranged to be viewed by reflection in the windscreen, and transmission holographic means in the path of the beam before reflection at the windscreen to correct for distortion produced at the reflection.

The reflection of the display at the windscreen, together with the use of transmission holographic means, separate from the windscreen, for correcting distortion produced at reflection, enables a head-up display to be produced at low cost.

The holographic means may include a hologram derived from a laser beam reflected from the curved windscreen along the same optical paths as those along which the display is viewed in use, and the invention also provides a method of recording such a hologram. A reference beam from the laser also impinges on the medium in which the hologram is recorded. Advantageously the holographic means includes a second hologram to correct for deviation produced by the first hologram: this enables the reconstructing beam from the display to occupy a band of frequencies and hence enables a low-cost filtered incoherent light source to be used. Such broad band holograph corrector plates are known for use in display holograms that are illuminated by filtered incoherent light sources. In the present case, however, neither the first nor the second hologram is modulated by information for generating an image of an object.

The invention will now be described by way of example with reference to the accompanying drawings. in which:

Fig. 1 is a schematic drawing of a conventional head-up display for a motor vehicle;

Fig. 2 is a schematic drawing of a head-up display for a motor vehicle constructed in accordance with the invention:

Fig. 2a shows, for explanatory purposes, the paths the light rays would take through the two holograms of figure 2 if they were spaced apart:

Fig. 3 is a schematic drawing to illustrate the method of recording the first hologram;

Fig. 3a is a schematic drawing to illustrate the illumination of the first hologram;

Fig. 4 is a schematic drawing to illustrate the method of recording the second hologram; and

Fig. 4a is a schematic drawing to illustrate the illumination of the second hologram.

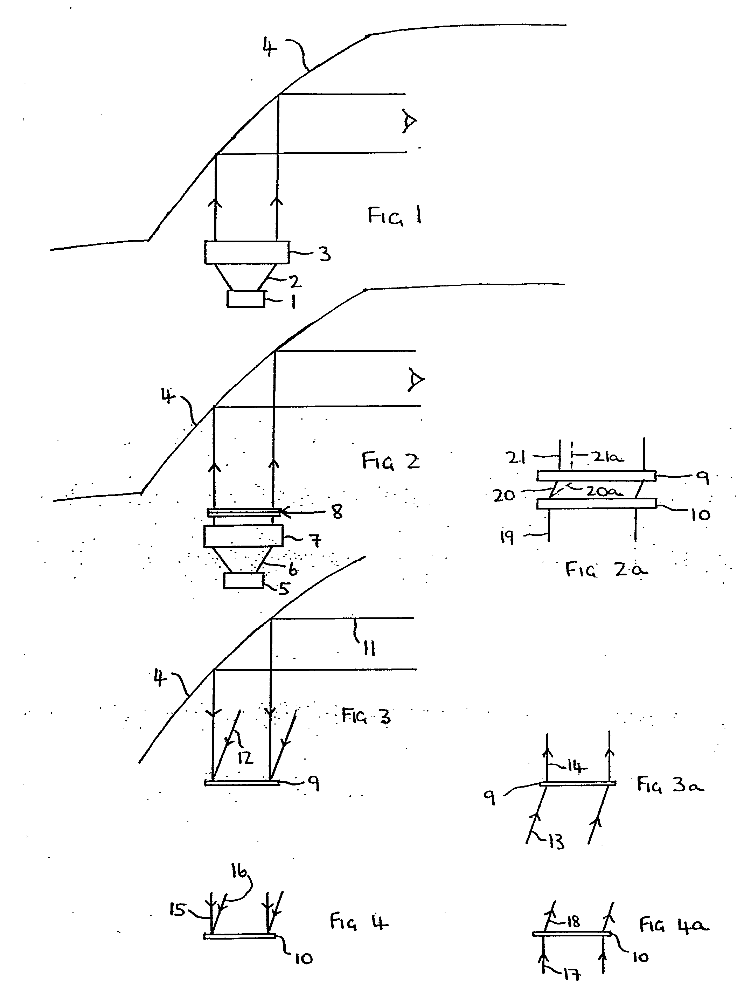

Referring to figure 1, conventional head-up displays for motor vehicles comprise a display 1, which could show vehicle speed or any other information normally shown in displays on the fascia, and which emits a beam 2 which enters a combined collimator and corrector optics system 3. The beam is reflected from the windscreen 4 and enters the eye of the driver. In order that the driver does not have to refocus his eye to read the display, the reflected beam is collimated i.e. the display appears to be at infinity. However, the vehicle windscreen is curved in directions both transverse to the vehicle and from top to bottom of the windscreen. Not only would the windscreen distort the display, but would also de-collimate it. For this reason correction optics is incorporated in the collimator 3 to compensate for this effect: the distortion and departure from collimation produced by 3 results in a collimated, true image of the object being viewed by the driver.

Referring to figure 2, the head-up display according to the invention comprises a display 5 which emits a beam 6, a collimator 7, and a holographic system 8. The collimator 7 and the holographic system 8 serve the same function as the combined collimator and corrector optics 3 of figure 1 i.e. the distortion and departure from collimation of the beam incident on the windscreen is such that a collimated, true image of the display can be seen by the driver. The light source could be a plasma source, or a back lit liquid crystal

display, or possibly a light emitting diode display, could be used.

Figure 2a shows the two elements of the holographic system on an enlarged scale and also spaced apart (in practice they are sandwiched together) and will be referred to hereinafter. The system consists of a first hologram 9 and a second hologram 10.

Figure 3 shows the method of recording the first hologram 9. A collimated incident beam 11 from a laser in the visible region impinges on the windscreen 4 at exactly the same position and orientation as does the beam reflected towards the driver shown in figure 2. The beam 11 is decollimated and distorted by the windscreen and is incident on the recording medium. A collimated reference beam 12 from the laser inclined preferably at 30° to the reflected beam is also incident on the recording medium. When the exposed recording medium is developed, a reconstructing beam 13 of the same frequency as the recording laser incident at 30° to the normal to the recording medium produces a beam 14 identical to, but opposite in direction to, the beam 11 incident on the recording medium. When this beam 14 is incident on the windscreen in use, a non distorted collimated beam is reflected towards the driver.

The recording medium is a volume hologram recording medium, the thickness of which preferably lies between 7 microns and 30 microns: changes in intensity of the incident light result in changes of refractive index of the recording medium. It may be high resolution silver halide photographic material, dichromated gelatin, or a photopolymeric medium.

The hologram 9 is analogous to a diffraction grating in that light of different colours (and hence wavelengths) are emergent at different angles. The light source of the display is an incoherent source filtered to pass a narrow band of wavelengths centred on the recording laser frequency, but nevertheless contains a sufficient spread of wavelengths that chromatic aberration would be produced in the beam 14.

It is to avoid this that the second hologram 10 is provided. A first collimated beam 15 is provided by the same laser as was used to produce the hologram 9 is normally incident on the same recording medium as for the first hologram, together with a collimated reference beam from the laser inclined at 30° to the incident beam. A normally incident reconstructing beam 17 is deflected by 30° to produce an emergent beam 18.

Referring to figure 2, it will be seen that a frequency in the filtered incoherent beam identical to the laser frequency normally incident on hologram 10 (beam 19) will be deflected (beam 20) through a certain angle but redeflected by hologram 9 to emerge normal (beam 21). However, a lower frequency component in the beam 19 would be deflected more (beam 20a) by the hologram 10, but this would again be compensated for by the hologram 9, since a lower frequency would again be deflected through a greater angle (beam 21a, again emerging normal to the hologram 9).

Such a broad band corrector system is known, but only in conjunction with display holograms which record images of objects to be viewed.

The two holograms 9 and 10 are laminated together using the thinnest possible adhesive layer to avoid introducing unwanted aberrations.

The holograms 9 and 10 so far described are originals and, while cheaper than the conventional correcting optics, still require individual exposure with laser beams. However, the holograms can each be replicated very cheaply using either a laser or a monochromatic incoherent light source, such as a filtered mercury lamp. The unit cost per vehicle can be reduced accordingly.

Although the windscreen has been described as being for a vehicle, the invention is applicable to any head-up display for a curved windscreen, for example, it could be used on any other land vehicle or water craft employing a curved windscreen. Further, although the illustrated system produces a well corrected collimated image i.e. the image is located at infinity relative to the viewer, the invention is also applicable to finite image conjugates i.e. the invention can also produce a well corrected image located at any fixed distance in front of the viewer.

## Claims

1. A head-up display for a curved windscreen, which comprises means for producing a beam emanating from a display arranged to be viewed by reflection in the windscreen, and transmission holographic means in the path of the beam before reflection at the windscreen to correct for distortion produced at the reflection.

2. A head-up display as claimed in claim 1, in which the beam producing means produces a collimated beam and the holographic means corrects for decollimation produced at the reflection.

3. A display as claimed in claim 1 or claim 2, in which the holographic means includes a hologram derived from a laser beam reflected from a curved windscreen along the same optical paths as those along which the display is viewed in use.

4. A display as claimed in claim 3, in which the holographic means includes a second hologram to correct for deviation produced by the first hologram, to enable the reconstructing beam from the display to occupy a band of light frequencies.

5. A display as claimed in claim 4, in which the display is illuminated by an incoherent light source and a filter which passes a band of frequencies.

6. A display as claimed in any one of claims 3 to 5, in which the holograms are derived by contact printing from originals recorded with two laser beams.

7. A display as claimed in any one of claims 1 to 6, in which the beam producing means and the transmission holographic means are arranged to be mounted beneath the windscreen.

8. A method of recording a transmission hologram for use for holographic means for correcting distortion produced by a curved windscreen in a head-up display, which comprises reflecting a laser beam from a curved windscreen onto the hologram along the paths it is desired that light from the display will be reflected in use by the windscreen towards a viewer.

FIG 1

FIG 2

FIG 2a

FIG 3

FIG 3a

FIG 4

FIG 4a